Europäisches Patentamt

European Patent Office

Office européen des brevets

(11) Publication number: **0 368 134**
**A1**

## (12) EUROPEAN PATENT APPLICATION

(21) Application number: 89120256.6

(51) Int. Cl.5: **H01B 15/00**

(22) Date of filing: 02.11.89

(30) Priority: 11.11.88 IT 365788

(43) Date of publication of application:
16.05.90 Bulletin 90/20

(84) Designated Contracting States:
**DE ES FR GB**

(71) Applicant: **LOLLINI INTERNATIONAL S.p.A.**
**Via Badini 9/4**
**I-40127 Quarto Inferiore (Bologna)(IT)**

(72) Inventor: **Lollini, Alessandro**
**Via Ugo Bassi 15**
**I-40121 Bologna(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) Process and apparatus for recovering copper from cables.

(57) The process for recovering copper from cables consists in conveying the cables along a cooling tunnel, in vaporizing liquid nitrogen at low temperature inside the tunnel and in introducing the cooled cables inside a mill adapted to fragment the insulating covering of the cables, which is made brittle by the cooling.

Fig. 1

# PROCESS AND APPARATUS FOR RECOVERING COPPER FROM CABLES

The present invention relates to a process for recovering copper from cables and to an apparatus for carrying out this process.

As is known, cables used to carry electric power, for telephone, telegraph communications and the like generally have a copper conductor. This material, which has known valuable characteristics, can be advantageously recovered from cables which are no longer in use and can subsequently be recycled.

The recovery of copper, however, is currently rather complicated and relatively expensive. This operation in fact requires the removal of the insulating sheath which covers the cables, which is generally made of plastic material and often has a metallic armor. Said insulating sheath is removed by stripping the cables, which sometimes have a considerable size, with obvious difficulties.

The aim of the present invention is to solve the described problem by providing a process which allows to recover copper from cables in an easy manner so that it can be applied on an industrial scale.

Within the scope of this aim, a further object of the present invention is to provide an apparatus for recovering copper from cables which is simply devised, safely reliable in operation and versatile in use.

This aim and this object are both achieved, according to the invention, by the present process for recovering copper from cables which is characterized in that it consists in conveying said cables along a cooling tunnel, in vaporizing liquid nitrogen at low temperature inside said tunnel and in introducing the cooled cables inside a mill adapted to fragment the insulating covering of said cables, which has been made brittle by said cooling.

The details of the invention will become apparent from the detailed description of a preferred embodiment of the copper recovering apparatus, illustrated only by way of non-limitative example in the accompanying drawings, wherein:

figure 1 is a schematic side view of the apparatus according to the invention for recovering copper from cables;

figure 2 is a transverse sectional view taken along the line II-II of figure 1.

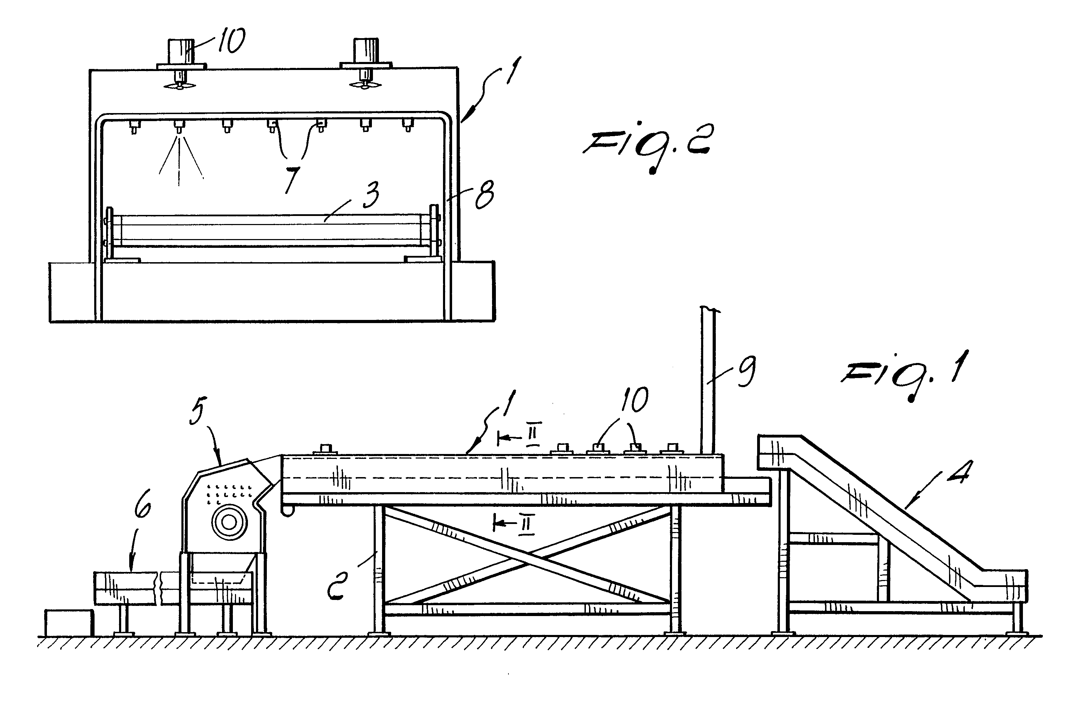

With particular reference to the above described figures, the copper recovering apparatus is constituted by a cooling tunnel 1 which is mounted with a horizontal axis on a fixed frame 2. A conveyor belt 3 for the cables from which the copper is to be recovered is arranged inside the tunnel 1. Said cables are sent into the tunnel 1 by means of a conveyor 4 which is arranged in line at one inlet end of said tunnel.

A known hammer mill 5, adapted to fragment the insulating covering of the copper conductor of the cables, is arranged at the output end of the tunnel 1. Said mill 5 feeds a conveyor 6 for unloading the product.

Liquid nitrogen at low temperature is vaporized inside the tunnel 1 and is distributed by means of a plurality of sprayers 1 arranged in series and fed by a duct 8. The temperature of the nitrogen is conveniently of approximately -150oC, i.e. higher than its boiling point, which is equal to -196oC.

The nitrogen vapor is removed by means of a suction duct 9. A plurality of fans 10 maintains an adequate circulation of air inside the tunnel 1.

The copper recovering process substantially provides the low-temperature cooling of the cables conveyed inside the tunnel 1, which is performed by means of the vaporization of the nitrogen. This cooling produces a significant increase in the brittleness of the insulating covering of the cables, which is directly exposed to the action of the cold environment.

Therefore, when the cables, cooled to a low temperature, are introduced into the mill 5 which is located at the outlet of the tunnel 1, the insulating covering which is subjected to the impacts rapidly fragments, thus freeing the copper conductor. The recovered product is then collected and removed by the unloading conveyor 6 arranged below the fragmenting mill.

To summarize, the process and apparatus according to the present invention allow to continuously and automatically separate the insulating covering from the copper conductor to be recovered from the cables, so that this operation can be performed on an industrial scale. The simplicity of the process furthermore ensures the economical convenience of recovery.

In the practical embodiment of the invention, the materials employed, as well as the shape and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Process for recovering copper from cables, characterized in that it consists in conveying said cables along a cooling tunnel (1), in vaporizing liquid nitrogen at low temperature inside said tunnel, and in introducing the cooled cables in a mill (5) adapted to fragment the insulating covering of said cables, which has been made brittle by said cooling.

2. Process according to claim 1, characterized in that said nitrogen is fed into said cooling tunnel (1) at a temperature of approximately -150°C.

3. Apparatus for recovering copper from cables, characterized in that it comprises a cooling tunnel (1) provided with conveyor means (3) on which said cables are adapted to be conveyed, a plurality of sprayer means (7) adapted to vaporize liquid nitrogen at low temperature inside said cooling tunnel, and a mill (5) arranged at the outlet of said tunnel and adapted to fragment the insulating covering of said cooled cables.

4. Apparatus according to claim 3, characterized in that a plurality of fans (10) is arranged inside said cooling tunnel (1) and is adapted to maintain an adequate circulation of air inside said tunnel.

5. Apparatus according to claim 3, characterized in that said fragmenting mill (5) is of the hammer type.

Fig.2

Fig.1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-1303167 (SASEBO HEAVY INDUSTRIES) * page 2, line 18 - page 6, line 61; figures 1-9 * | 1, 3-5 | H01B15/00 |
| A | US-A-4350027 (TYREE) * column 1, line 62 - column 6, line 20; figure 1 * | 1, 3, 4 | |

**TECHNICAL FIELDS SEARCHED (Int. Cl.5 )**

H01B
F25D

The present search report has been drawn up for all claims

| Place of search | Date of completion of the search | Examiner |
|---|---|---|
| THE HAGUE | 05 FEBRUARY 1990 | DEMOLDER J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document